# FASCICULE DE BREVET EUROPEEN

(11) **EP 2 334 873 B1**
(45) Date de publication et mention de la délivrance du brevet: **25.11.2015**
(21) Numéro de dépôt: 09783695.1
(22) Date de dépôt: 02.10.2009
(51) Int. Cl.: E01C 7/18, E01C 7/26, C08L 95/00, C09D 195/00

(54) **Enrobé bitumineux destiné à la préparation d'une couche de roulement et son utilisation, et utilisation d'un matériau de faible masse volumique apparente.**
Bituminöse Beschichtung zur Herstellung einer Schicht und deren Verwendung, und Verwendung eines Materials mit geringer Rohdichte
Bituminous mix for the preparation of a wearing and its use, and use of a low bulk density material.

(30) Priorité: 02.10.2008 FR 0856683
(43) Date de publication de la demande: 22.06.2011
(73) Titulaire: Eurovia, 92500 Rueil-Malmaison (FR)
(72) Inventeur: MAZE, Michel, F-33000 Bordeaux (FR); FAUCON-DUMONT, Stéphane, F-33127 Martignas (FR); FER, Sébastien, F-33160 Saint Médard en Jalles (FR)
(74) Mandataire: Regimbeau
(86) Numéro de dépôt international: PCT/EP2009/062834
(87) Numéro de publication internationale: WO 2010/037853

(56) Documents cités:
- AT-B- 383 609
- FR-A- 2 344 588
- JP-A- 6 146 204
- JP-A- 2000 355 903
- US-A- 2 863 841

## Description

La présente invention concerne un enrobé bitumineux, selon le préambule de la revendication 1, aux performances acoustiques améliorées destiné à être intégré au sein d'une couche de roulement ou d'un revêtement routier l'utilisation de cet enrobé selon le préambule de la revendication 7, et l'utilisation d'un matériau de faible masse volumique apparente selon le préambule de la revendication 9. Des exemples sont connus des document AT 383609B, JP 06146204A, JP 2000355903A, FR 2344588A et US 2863841A.

L'invention est donc dans le domaine technique des travaux publics et plus particulièrement dans le domaine de la construction de chaussées.

Un enrobé bitumineux est un mélange de granulats (gravillon, matériaux issus du recyclage, sable et filler) et d'un liant d'origine bitumineuse, synthétique ou végétale, additivé ou non. Typiquement et de manière non restrictive, la quantité suffisante de liant, pour obtenir 1 à 15 parties massiques de bitume résiduel, est malaxée avec 85 à 99 parties massiques de granulat (considérant leur poids sec). Il existe, en fonction de la composition et notamment celle du squelette granulaire, des enrobés continus ou discontinus, épais, minces, très minces voire ultra-minces, ouverts (ou encore drainants ou poreux), grenus, semi-grenus, denses ou semi-denses, stockables ou non, etc. bien connus de l'homme du métier, généralement normalisés et décrits par exemple dans l'ouvrage en 2 tomes «Les enrobés bitumineux », édité conjointement par l'union des syndicats des industries routières de France (USIRF) et la Revue Générale des Routes et Aérodromes (Paris, 2001). Des additifs peuvent être ajoutés soit au liant, soit au granulat, soit à l'enrobé. On entend par additif, des produits de type polymères, cires végétales ou d'origine pétrochimique, dopes d'adhésion. Ces enrobés peuvent être utilisés à chaud (130°C à 180°C), tiède (110°C à 130°C), semi-tiède (80°C à 110°C), voir à froid (T<80°C).

Dans le cas du procédé dit "à chaud", les granulats sont chauffés dans des dispositifs appelés "sécheurs" afin de les sécher, permettant ainsi une bonne adhésion du bitume au granulat. Le bitume est également chauffé, à des températures de l'ordre de 160°C afin d'en abaisser la viscosité et de permettre un bon enrobage des granulats. L'enrobé ainsi formé est ensuite appliqué chaud (typiquement à plus de 140°C) sur la chaussée puis compacté chaud également, la température initialement élevée garantissant sa maniabilité. Le matériau se rigidifie ensuite au fur et à mesure qu'il se refroidit.

Dans les procédés dits "à froid", les granulats ne sont pas séchés, et sont mélangés tels quels, c'est-à-dire avec leur humidité naturelle et à température ambiante. Le bitume arrive alors sous diverses formes, la plus courante étant celle d'une émulsion de bitume qui permet ainsi d'avoir un produit peu visqueux et donc maniable à température ambiante. L'émulsion est parfois légèrement réchauffée à des températures de l'ordre de 50°C. Un autre moyen, d'usage encore peu développé mais en croissance, consiste à faire mousser le bitume chaud (typiquement 160°C) au contact d'un peu d'eau injectée directement dans le bitume selon des procédés adaptés, pour ensuite mélanger cette mousse aux granulats humides. Des additifs peuvent être ajoutés au bitume et/ou à l'eau injectée pour modifier les propriétés de la mousse, notamment sa stabilité et son volume.

Les procédés dits "tièdes" ou "semi-tièdes", et dont le nom est parfois différent de celui proposé ici (semi-chaud,...) mais que l'homme de l'art saura reconnaître de manière non équivoque, consistent soit à légèrement réchauffer le granulat, mais pas assez pour le sécher complètement, soit à le sécher à des températures justes supérieures à 100°C. Plusieurs procédés existent, le liant pouvant aussi être apporté sous les mêmes formes que pour les enrobés à froid (émulsion ou mousse de bitume). Également, et en particulier lorsque l'objectif est de diminuer la température de fabrication et de mise en oeuvre des enrobés à chaud, afin de limiter les émissions de fumées, cela peut nécessiter l'emploi d'additifs ou de procédés originaux afin d'obtenir que l'enrobé maintienne un niveau de maniabilité compatible avec sa mise en oeuvre à des températures inférieures à celles habituellement utilisées.

On entend par granulat, des matériaux d'origine diverses, parmi lesquels les granulats issus de carrières ou de gravières, les produits de recyclage tels que les agrégats provenant du fraisage d'enrobés anciens, les rebuts de fabrication, les matériaux provenant du recyclage de matériaux de construction (bétons de démolition, ...), les laitiers, les schistes, les granulats artificiels de toute origine et provenant par exemple de mâchefers d'incinération des ordures ménagères (MIOM), ainsi que leurs mélanges en toutes proportions. Ces granulats peuvent être secs ou humides. La granulométrie des granulats est choisie dans la gamme 0/Dₘₐₓ, Dₘₐₓ étant le diamètre maximal du granulat tel que défini selon la norme XP P 18-540 et allant en général de 4 à 31,5 mm.

Les granulats de petite dimension, soit de 0 à 4mm, sont appelés sable.

Par fines minérales ou « filler », on entend toute charge minérale ou siliceuse, ayant une dimension inférieure à 80µm, avantageusement passant à travers un tamis à maille carrée de 0,063 mm de côté. Les fines peuvent être des fines naturelles ou d'apport, par exemple des fines calcaires (carbonate de calcium), du ciment ou de la chaux hydratée, ou de récupération.

On entend par liant, un liant hydrocarboné, avantageusement d'origine fossile, ou tout liant d'origine végétale ou synthétique utilisable pour la réalisation d'enrobé, d'asphalte, de mastic, de membrane. Avantageusement il s'agit d'un bitume pur, de toute composition contenant du bitume et éventuellement un ou plusieurs additifs et/ou un ou plusieurs émulsifiants et/ou un ou plusieurs viscosifiants et/ou un ou plusieurs fluxants et/ou un ou plusieurs plastifiants et/ou tout autre additif permettant d'en ajuster les propriétés, comme par exemple l'adhésivité. À titre d'exemple, on citera les bitumes, les bitumes modifiés par des élastomères et des plastomères, les émulsions de bitume et la mousse de bitume.

Ce liant bitumineux peut se trouver sous forme liquide ou sous la forme d'une émulsion ou d'une mousse. Avantageusement, dans le cas de la fabrication d'enrobés bitumineux à froid, le liant bitumineux se trouve sous la forme d'une émulsion ou d'une mousse.

On entend par additif, tout produit ajouté dans le liant et/ou le produit final, enrobés, asphaltes, mastics, membranes.

Ces additifs sont employés à des fins mécaniques, copolymère d'éthylène (comme EVA, EBA, polyéthylène, polypropylène), SBS, SB réticulés ou non, les polymères en général.

A des fins d'adhésion, on emploi des dopes d'adhésivité par exemple des émulsifiants dérivés des polyamines.

Dans le cadre de l'abaissement des températures de fabrication et d'emploi, les additifs employés sont par exemple des huiles naturelles traitées chimiquement ou non, des zéolithes, de la paraffine.

Les additifs peuvent également être utilisés à des fins esthétiques, changement de couleur des produits finaux, par l'emploi de pigment naturel ou non, tel que l'oxyde fer par exemple.

La circulation des véhicules sur une chaussée entraîne des nuisances sonores. Ces nuisances, généralement nommées bruit de contact pneumatique chaussée ou BCPC, peuvent être importantes en fonction de l'emplacement des chaussées par rapport aux zones habitées, voirie urbaine ou périurbaine par exemple, en fonction du débit, de la composition et de la vitesse du trafic, voie rapide ou voie lourde par exemple.

Il existe un besoin de réduction des nuisances sonores attribuables à la circulation des véhicules sur la couche de roulement des chaussées. Cette réduction peut être obtenue par une action sur la production du bruit au niveau du contact roue/chaussée et/ou par la mise en oeuvre d'un revêtement ayant une capacité d'absorption du bruit importante.

La capacité d'une couche de roulement à réduire les nuisances sonores apportées par le bruit de contact pneumatique chaussée (BCPC) des véhicules est un paramètre qui dépend entre autres de la nature de la couche de roulement, des conditions de trafic, des conditions météorologiques et qui diminue au cours du temps à la suite de l'évolution de la nature de la couche de roulement sous l'effet du trafic et/ou des cycles climatiques.

Des études sur le bruit de contact pneumatique chaussée (BCPC) ont montré que celui-ci dépend pour une grande part, de la texture de la chaussée et de la capacité d'absorption acoustique de la couche de roulement.

Certains auteurs («Les enrobés bitumineux », tome1, USIRF, Rapport de synthèse 2003 de l'OFROU sur revêtement peu bruyant, article du LCPC congrès INFRA 2001 sur les revêtements de chaussée limitant le bruit) ont montré que les critères importants de la couche de roulement pour accroître ses capacités d'absorption acoustique sont la granulométrie et la teneur en vides.

On entend par granulométrie la taille maximale des granulats utilisés dans l'enrobé bitumineux. Une granulométrie optimale pour la réduction du BCPC est comprise entre 4 et 6 mm.

On entend par teneur en vides le pourcentage volumétrique de vide entre les éléments d'enrobé. Une teneur en vides optimale pour la réduction du BCPC est comprise entre 18 et 25%.

Ces paramètres sont visés par la quasi totalité des techniques existantes.

L'invention présente se base sur ces paramètres, mais les inventeurs ont constaté que l'absorption acoustique est encore accrue par l'ajout de matériaux de faible masse volumique, avantageusement la Vermiculite exfoliée.

L'objectif est de réaliser une couche de roulement réduisant les nuisances sonores apportées par le bruit de contact pneumatique chaussée (BCPC) et qui soit résistante au trafic routier ainsi qu'aux variations climatiques.

Les buts ci-dessus sont atteints selon l'invention par un enrobé bitumineux comprenant une quantité de vermiculite exfoliée suffisante pour améliorer ses propriétés acoustiques. L'enrobé bitumineux selon l'invention permet de réaliser une couche de roulement qui présente une grande capacité de réduction des nuisances sonores.

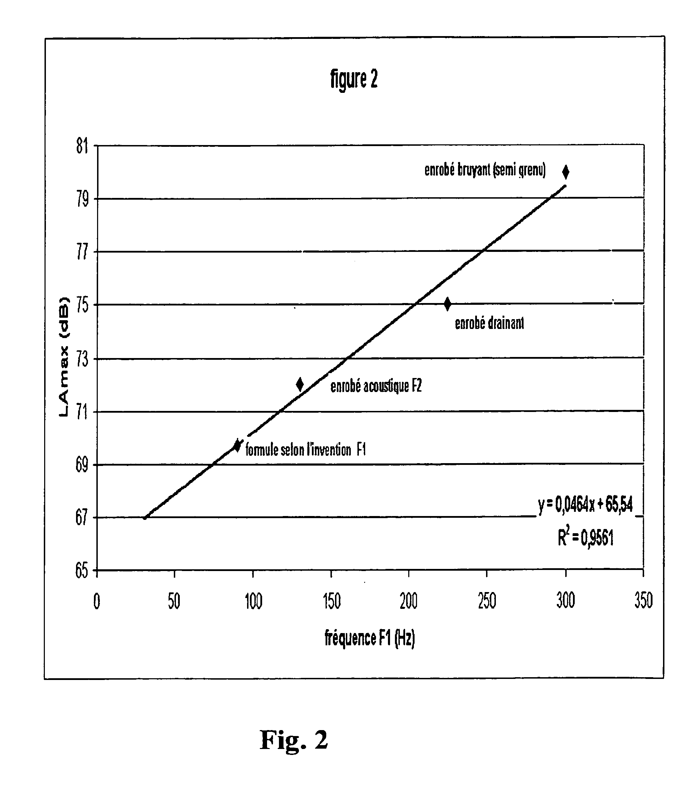

D'une manière surprenante, les inventeurs ont en effet constaté que l'ajout de vermiculite exfoliée (0,6% en masse) à une base type enrobé drainant 0/6 mm permet d'atteindre une fréquence d'absorption de la vibration de 90 Hz (à l'essai de sollicitation par choc et analyse fréquentielle utilisée par le centre de recherche- cf exemple 3), soit une mesure LAmax comprise entre 69dB(A) et 70dB(A) (voir Figure 2), soit un gain compris entre 2 et 3 dB(A) vis à vis des enrobés acoustiques classiques.

En outre, les inventeurs ont montré que ce béton bitumineux présente une tenue au trafic répondant à la norme relative à ce type d'enrobé, soit 8,8% d'ornière à 3000 cycles pour une spécification < 20%.

La présente invention a ainsi pour objet un enrobé bitumineux comprenant un matériau minéral et/ou organique de faible masse volumique apparente comprise entre 0,01 et 0,3 t/m³ en une quantité suffisante pour améliorer ses performances acoustiques.

Avantageusement, le matériau de faible masse volumique comprise entre 0,01 et 0,3 t/m³ est une roche naturelle expansée non soluble dans l'eau, même partiellement.

Avantageusement, la roche naturelle expansée non soluble dans l'eau, même partiellement, est la vermiculite exfoliée.

La perlite expansée est exclue du champ de l'invention car elle est partiellement soluble dans l'eau.

La Vermiculite exfoliée est disponible commercialement. La Vermiculite est issue d'un minerai de la famille des micas par traitement thermique.

De préférence, la roche naturelle expansée non soluble dans l'eau, même partiellement, présente une granulométrie comprise entre 0 et 14 mm.

Le matériau organique d'origine pétrolière ou végétale de faible masse volumique apparente comprise entre 0,01 et 0,3 t/m³ peut être préférentiellement un matériau organique expansé. Avantageusement, il représente une mousse expansée solide par exemple une mousse type Ethylène Propylène Diène Monomère (EPDM) expansée ou un polystyrène expansé.

Avantageusement, les granulats selon l'invention comprennent des granulats de petite dimension. Selon un mode de réalisation préféré de l'invention, les granulats d'enrobé bitumineux selon l'invention présentent une granulométrie comprise entre 2 et 8 mm, de préférence entre 4 et 6 mm.

De façon avantageuse, l'enrobé selon l'invention comprend de 3 à 12 %, de préférence de 4 à 7 % en poids de liant par rapport au poids des granulats.

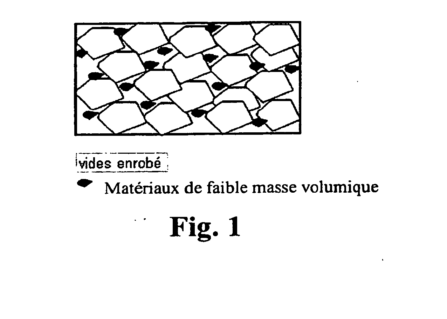

Comme le montre la Figure 1, le matériau minéral et/ou organique de faible masse volumique apparente comprise entre 0,01 et 0,3 t/m³ comble en partie les vides du squelette granulaires de l'enrobé bitumineux selon l'invention.

Avantageusement, la quantité de matériau minéral et/ou organique de faible masse volumique apparente comprise entre 0,01 et 0,3 t/m³ permet de combler un volume compris entre 1 et 30% des vides, avantageusement 10% des vides.

Selon un mode de réalisation particulier de l'invention, l'enrobé bitumineux selon l'invention présente ainsi une teneur en vides comprise entre 10 et 30%, avantageusement entre 15 et 25%, de manière particulièrement préférée entre 18 et 20% de son volume total.

Avantageusement, la quantité de matériau minéral et/ou organique de faible masse volumique apparente comprise entre 0,01 et 0,3 t/m³ est comprise entre 0,2 et 5%, de préférence 0,5 et 1%, de manière particulièrement préférée 0,6 et 0,8% poids/poids par rapport au poids total d'enrobé bitumineux.

Avantageusement, l'enrobé bitumineux selon l'invention présente une teneur en vides comprise entre 18 et 25%.

Avantageusement, les granulats de l'enrobé bitumineux selon l'invention sont conformes pour une utilisation en couche de roulement suivant les normes en vigueur.

Avantageusement le liant bitumineux de l'enrobé selon l'invention est choisi parmi les bitumes routiers, les bitumes purs, les bitumes modifiés par des élastomères ou des plastomères, les bitumes additivés.

Avantageusement, le liant de l'enrobé bitumineux selon l'invention est modifié ou non par des élastomères ou des plastomères et/ou comprend un dopant d'adhésivité.

De préférence, l'enrobé bitumineux selon l'invention est un béton bitumineux, en particulier de type BBTM (béton bitumineux très mince) de classe 1 ou 2 conformément à la norme NF EN 13108-2.

Selon un mode de réalisation préféré de l'invention, l'enrobé bitumineux selon l'invention comprend :
- entre environ 70 et environ 95 % de granulats 4/6 mm,
- entre environ 0 et environ 30 % de granulats 0/2 mm,
- entre environ 0 et environ 5% de filler,
- entre environ 4 et environ 7 % de bitume,
- entre environ 0.2 et environ 1% de vermiculite.

De préférence, l'enrobé bitumineux selon l'invention comprend :
- environ 82,3% de granulats 4/6 mm,
- environ 9,5 % de granulats 0/2 mm,
- environ 2,8% de filler calcaire,
- environ 4,8% de bitume modifié,
- environ 0,6% de vermiculite exfoliée.

Selon un mode de réalisation préféré de l'invention, l'enrobé bitumineux selon l'invention comprend :
- entre environ 70 et environ 80 % de granulats 4/6 mm,
- entre environ 0 et environ 30 % de granulats 0/2 mm,
- entre environ 0 et environ 5% de filler,
- entre environ 4 et environ 7 % de bitume,
- entre environ 0.2 et environ 1% d'un additif organique de densité < 0,3 t/m³.

De préférence, l'enrobé bitumineux selon l'invention comprend :
- environ 73,4% de granulats 4/6 mm,
- environ 18,8% de granulats 0/2 mm,
- environ 2% de filler calcaire,
- environ 5,2%de bitume 35/50,
- environ 0,6% d'un additif organique de densité < 0,3 t/m³.

Un autre objet de l'invention concerne l'utilisation d'un enrobé bitumineux selon l'invention pour la fabrication d'une couche de roulement à performance acoustique améliorée.

Un autre objet de l'invention concerne une couche de roulement à performance acoustique améliorée caractérisée en ce qu'elle comprend un enrobé bitumineux selon l'invention.

Un autre objet de l'invention concerne l'utilisation d'un matériau minéral et/ou organique de faible masse volumique apparente comprise entre 0,01 et 0,3 t/m³, de préférence une roche naturelle expansée non soluble dans l'eau, même partiellement, dans un enrobé bitumineux destiné à la préparation d'une couche de roulement.

D'un matériau de faible masse volumique apparente comprise entre 0,01 et 0,3 t/m³ choisi parmi et/ou un matériau organique

Dans le cadre de l'invention, l'inventeur se réserve la possibilité d'ajuster la teneur en matériaux de faible masse volumique dans les produits routiers cités, afin d'obtenir une performance acoustique suffisante.

La présente invention sera mieux comprise en référence aux figures et aux exemples suivants.
Figure 1 : macrotexture de l'enrobé bitumineux selon l'invention. (1) granulats enrobés. (2) roche naturelle expansée. (3) vides.
Figure 2 : graphique représentant la LAmax (NF S 31-119-2) sur chantier en fonction de la fréquence mesurée à l'essai pratiqué par le centre de recherche.
Figure 3 : tableau des spécifications NF EN 13108-2

### EXEMPLES

### Exemple 1 : Réalisation d'un enrobé bitumineux selon l'invention comprenant une roche naturelle expansée non soluble dans l'eau

La composition d'enrobé testée (F1) est la suivante :

| | |
|---|---|
| 4/6 mm concassé Moreau | 82,3% |
| 0/2 mm concassé Moreau | 9,5% |
| Filler | 2,8% |
| Bitume modifié | 4,8% |
| Vermiculite SF | 0,6% |
| Teneur en vides | 20.4% |

La formule est une base type enrobé drainant 0/6 mm, la densité théorique de cette formule est de 2,234 T/m³, la vermiculite (0,09 T/m³) allège considérablement l'enrobé, le dosage à 0,6% soit 6 kg par tonne d'enrobé correspond à un volume de 66 litres par tonne d'enrobé.

### Exemple 2 : Réalisation d'un enrobé bitumineux classique (essai comparatif)

Afin d'établir un comparatif et de confirmer l'effet de l'ajout de matériaux de faible masse volumique (Vermiculite), la composition (F2) suivante a également été testée:

| | |
|---|---|
| 4/6 mm concassé Moreau | 74.2% |
| 0/2 mm concassé Moreau | 19% |
| Filler | 1.9% |
| Bitume modifié | 4.9% |
| Teneur en vides | 21% |

Cette composition correspond à un enrobé acoustique classique.

### Exemple 3 : Méthode de mesure du sain acoustique d'un enrobé bitumineux selon l'invention

Les inventeurs utilisent pour la mesure de l'absorption acoustique un essai basé sur la sollicitation par choc d'une éprouvette d'enrobé et d'une analyse fréquentielle de l'onde après traversée de l'enrobé. Après le choc, l'on récupère un signal vibratoire qui lie l'amplitude du signal en fonction des fréquences de vibrations. La gamme de fréquence balayée s'étend de 20 à 2000 Hz. La fréquence retenue pour représenter la qualité acoustique du revêtement est celle correspondant à la première amplitude maximale du signal. Un graphique (figure 2) montre la relation entre cette fréquence mesurée et les performances mesurées au LAmax (NF S 31-119-2) sur chantier. Le LAmax est un essai normalisé, utilisé par les ponts et chaussées, qui disposent d'une base de données nationale.

Il existe un classement des enrobés établi suivant les essais LAmax NF S 31-119-2 de décembre 2000. Cette méthode normalisée consiste en une mesure acoustique au passage d'un véhicule maîtrisé VM. La norme impose toutes sortes de paramètres : type de véhicule, vitesse. La Figure 2 montre le repérage LAmax de trois types d'enrobés. Le résultat LAmax est exprimé en dB(A) (dB acoustique). A savoir, le seuil de gène pour le riverain est de 65 dB(A).

### Exemple 4 : Essai de gain acoustique d'un enrobé bitumineux selon l'invention

La fréquence mesurée avec la formule de l'Exemple 1 est de **90 Hz,** ce qui permet d'obtenir une mesure LAmax comprise entre **69dB(A) et 70dB(A)**(voir Figure 2), soit un gain compris entre 2 et 3 dB(A) vis à vis de la formule de l'Exemple 2.

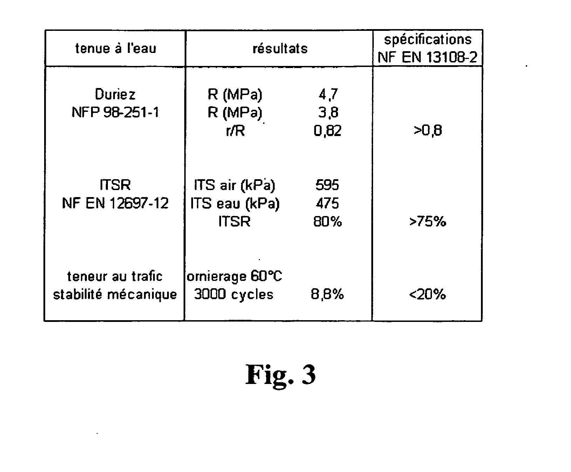

La tenue au trafic mesurée au CRM de l'enrobé mis au point selon l'invention répond aux spécifications de la norme NF EN 13108-2 relative aux enrobés très minces (BBTM), au niveau de l'ensemble des essais mécaniques classiques (voir tableau Figure 3).

### Exemple 5 : Réalisation d'un enrobé bitumineux selon l'invention comprenant un matérieu organique

La composition d'enrobé testée (F3) est la suivante :

| | |
|---|---|
| 4/6 mm concassé Moreau | 73,4% |
| 0/2 mm concassé Moreau | 18,8% |
| Filler | 2% |
| Bitume 35/50 | 5,2% |
| Additif organique d<0,3t/m³ | 0,6% |

Comme étudié suivant les exemples 3 et 4, la fréquence mesurée à l'essai d'absorption acoustique est de 82 Hz, ce qui nous ramène suivant la figure 2 à une mesure LAmax de 69 dB(A).Soit -3 dB(A) vis à vis de la composition de référence, exemple 2.

### Exemple 5 : Performances mécaniques de la composition F3

| Essais | Résultats | spécifications |
|---|---|---|
| **Duriez NF EN 12697-12 (B)** | | |
| **C_{D} (kPa)** | 7236 | |
| **C_{w} (kPa)** | 5634 | |
| **i / C (%)** | 78% | >75% |

| **Orniérage HF EN 12697-22** | | |
|---|---|---|
| **% ornière 3000 cycles** | 5.1% | < 20% |
| **% vide éprouvettes** | 18,2 | 16-22% |

### Références bibliographiques

➢ Les enrobés bitumineux Tomes 1 et 2 : USIRF
➢ Rapport de synthèse 2003 de L'OFROU
➢ Article LCPC congrès INFRA 2001
➢ Guide technique de dimensionnement de chaussée du SETRA
➢ Gel/dégel :http://www.aqtr.qc.ca/documents/11_AllocutionsConferen ces/Pierre_Langlois.pdf
➢ La route ça m'intéresse : Revue générale des route
➢ Gel/dégel : http://infos-routes.cg.03.fr/img/schema.gif
➢ Manuel LCPC d'aide à la formulation des enrobés. J-L Delorme, C.de la Roche, L.Wendling

## Revendications

1. Enrobé bitumineux destiné à la préparation d'une couche de roulement comprenant un liant d'origine fossile et un matériau de faible masse volumique apparente comprise entre 0,01 et 0,3 t/m³ **caractérisé en ce que** le matériau est choisi parmi une roche naturelle expansée non soluble dans l'eau, à l'exclusion de la perlite, et/ou un matériau organique, en une quantité suffisante pour améliorer ses performances acoustiques.

2. Enrobé bitumineux selon la revendication 1, **caractérisé en ce que** la roche naturelle expansée non soluble dans l'eau est la vermiculite exfoliée, le matériau organique est de l'EPDM expanse.

3. Enrobé bitumineux selon l'une quelconque des revendications précédentes, **caractérisé en ce que** la quantité de matériau de faible masse volumique est comprise entre 0,2 et 5%, de préférence 0,5 et 1%, de manière particulièrement préférée 0,6 et 0,8% par rapport au poids total d'enrobé bitumineux.

4. Enrobé bitumineux selon l'une quelconque des revendications précédentes, **caractérisé en ce que** le matériau de faible masse volumique présente une granulométrie comprise entre 0 et 14 mm.

5. Enrobé bitumineux selon l'une quelconque des revendications précédentes, comprenant :
- environ 82,3% de granulats 4/6 mm,
- environ 9,5% de granulats 0/2 mm,
- environ 2,8% de filler calcaire,
- environ 4,8% de bitume modifié,
- environ 0,6% de vermiculite exfoliée.

6. Enrobé bitumineux selon l'une quelconque des revendications 1 à 4, comprenant:
- environ 73,4% de granulats 4/6 mm,
- environ 18,8% de granulats 0/2 mm,
- environ 2% de filler calcaire,
- environ 5,2%de bitume 35/50,
- environ 0,6% d'un additif organique de densité < 0,3 t/m³.

7. Utilisation d'un enrobé bitumineux selon l'une quelconque des revendications 1 à 6 pour la fabrication d'une couche de roulement à performance acoustique améliorée.

8. Couche de roulement à performance acoustique améliorée **caractérisée en ce qu'**elle comprend un enrobé bitumineux selon l'une quelconque des revendications 1 à 6.

9. Utilisation, dans un enrobé bitumineux comprenant un liant d'origine fossile et destiné à la préparation d'une couche de roulement, d'un matériau de faible masse volumique apparente comprise entre 0,01 et 0,3 t/m³ **caractérisé en ce que** le matériau est choisi parmi une roche naturelle expansée non soluble dans l'eau, à l'exclusion de la perlite, et/ou un matériau organique.

## Patentansprüche

1. Bitumenhaltiges Mischmakadam für die Herstellung einer Fahrbahnschicht, umfassend ein Bindemittel fossilen Ursprungs und ein Material mit zwischen 0,01 und 0,3 t/m³ inbegriffener geringer sichtbarer Volumenmasse, **dadurch gekennzeichnet, dass** das Material ausgewählt ist aus einem expandierten, nicht wasserlöslichen Naturgestein, unter Ausschluss von Perlit und / oder einem organischen Material in einer ausreichenden Menge, um seine Schallleistung zu verbessern.

2. Bitumenhaltiges Mischmakadam gemäß Anspruch 1, **dadurch gekennzeichnet, dass** das expandierte, nicht wasserlösliche Naturgestein abgeblättertes Vermiculit ist, das organische Material ist expandiertes EPDM.

3. Bitumenhaltiges Mischmakadam gemäß einem der voranstehenden Ansprüche, **dadurch gekennzeichnet, dass** die Menge des Materials mit geringer Volumenmasse zwischen 0,2 und 5 %, bevorzugt 0,5 und 1 %, besonders bevorzugt zwischen 0,6 und 0,8 % im Verhältnis zum Gesamtgewicht des bitumenhaltigen Mischmakadams inbegriffen ist.

4. Bitumenhaltiges Mischmakadam gemäß einem der voranstehenden Ansprüche, **dadurch gekennzeichnet, dass** das Material mit geringer Volumenmasse eine zwischen 0 und 14 mm inbegriffene Korngröße aufweist.

5. Bitumenhaltiges Mischmakadam gemäß einem der voranstehenden Ansprüche, umfassend:
- rund 82,3 % 4/6 mm Granulate,
- rund 9,5 % 0/2 mm Granulate,
- rund 2,8 % kalkhaltigen Filler,
- rund 4,8 % modifiziertes Bitumen,
- rund 0,6 % abgeblättertes Vermiculit.

6. Bitumenhaltiges Mischmakadam gemäß Anspruch 1 bis 4, umfassend:
- rund 73,4 % 4/6 mm Granulate,
- rund 18,8 % 0/2 mm Granulate,
- rund 2 % kalkhaltigem Filler,
- rund 5,2 % 35/50 Bitumen,
- rund 0,6 % eines organischen Zusatzstoffs mit einer Dichte von < 0,3 t/m³.

7. Verwendung eines bitumenhaltigen Mischmakadams gemäß Anspruch 1 bis 6 für die Herstellung einer Fahrbahnschicht mit verbesserter Schallleistung.

8. Fahrbahnschicht mit verbesserter Schallleistung, **dadurch gekennzeichnet, dass** sie ein bitumenhaltiges Mischmakadam gemäß Anspruch 1 bis 6 umfasst.

9. Verwendung eines Materials mit zwischen 0,01 und 0,3 t/m³ inbegriffener geringer sichtbarer Volumenmasse in einem bitumenhaltigen Mischmakadam, umfassend ein Bindemittel fossilen Ursprungs, das zur Herstellung einer Fahrbahnschicht bestimmt ist, **dadurch gekennzeichnet, dass** das Material ausgewählt ist: aus einem nicht wasserlöslichen, expandierten Naturgestein, unter Ausschluss von Perlit, und / oder einem organischen Material.

## Claims

1. Bituminous mix intended for the preparation of a wearing course comprising a binder of fossil origin and a material of low bulk density ranging between 0.01 and 0.3 t/m³ **characterised in that** the material is chosen from an expanded natural rock not soluble in water, with the exception of perlite, and/or an organic material, in sufficient quantity to improve the acoustic performance thereof.

2. Bituminous mix according to claim 1, **characterised in that** the expanded natural rock not soluble in water is exfoliated vermiculite, the organic material is expanded EPDM.

3. Bituminous mix according to any of the preceding claims **characterised in that** the quantity of material of low bulk density ranges between 0.2 and 5%, preferably 0.5 and 1%, in a particularly preferred manner 0.6 and 0.8% compared to the total weight of bituminous coating.

4. Bituminous mix according to any of the preceding claims **characterised in that** the material of low bulk density has a particle size ranging between 0 and 14 mm.

5. Bituminous mix according to any of the preceding claims, comprising:
- around 82.3% of 4/6 mm aggregates,
- around 9.5% of 0/2 mm aggregates,
- around 2.8% of limestone filler,
- around 4.8% of modified bitumen,
- around 0.6% of exfoliated vermiculite.

6. Bituminous mix according to any of claims 1 to 4, comprising:
- around 73.4% of 4/6 mm aggregates,
- around 18.8% of 0/2 mm aggregates,
- around 2% of limestone filler,
- around 5.2% of 35/50 bitumen,
- around 0.6% of an organic additive of density < 0.3 t/m³.

7. Use of a bituminous mix according to any of claims 1 to 6 for the manufacture of a wearing course with improved acoustic performance.

8. Wearing course with improved acoustic performance **characterised in that** it comprises a bituminous mix according to any of claims 1 to 6.

9. Use, in a bituminous mix comprising a binder of fossil origin and intended for the preparation of a wearing course, of a material of low bulk density ranging between 0.01 and 0.3 t/m³ **characterised in that** the material is chosen from an expanded natural rock not soluble in water, with the exception of perlite and/or an organic material.
